(19) Europäisches Patentamt
European Patent Office
Office européen des brevets

(11) EP 4 692 868 A1

(12) # EUROPEAN PATENT APPLICATION
published in accordance with Art. 153(4) EPC

(43) Date of publication:
**11.02.2026 Bulletin 2026/07**

(21) Application number: **24780977.5**

(22) Date of filing: **17.01.2024**

(51) International Patent Classification (IPC):
***G02B 5/23*** *(2006.01)* ***G02F 1/1335*** *(2006.01)*
***G02F 1/13357*** *(2006.01)* ***G02B 6/00*** *(2006.01)*

(52) Cooperative Patent Classification (CPC):
**G02B 5/23; G02B 6/00; G02F 1/1335; G02F 1/1336**

(86) International application number:
**PCT/KR2024/000830**

(87) International publication number:
**WO 2024/204982 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 KR 20230041212**

(71) Applicant: **Toray Advanced Materials Korea Inc.**
**Gumi-si, Gyeongsangbuk-do 39389 (KR)**

(72) Inventors:
- **JIN, Sang Woo**
  **Gumi-si Gyeongsangbuk-do 39389 (KR)**
- **KOO, Seon Woong**
  **Gumi-si Gyeongsangbuk-do 39389 (KR)**
- **LEE, Ji Hoon**
  **Gumi-si Gyeongsangbuk-do 39389 (KR)**

(74) Representative: **Groth & Co. KB**
**P.O. Box 6107**
**102 32 Stockholm (SE)**

(54) **COLOR CONVERSION SHEET AND BACKLIGHT UNIT COMPRISING SAME**

(57) A color conversion sheet according to an embodiment of the present invention comprises: a wavelength conversion layer in which an organic phosphor is dispersed in a resin matrix; and a light absorption layer in which an organic light absorber located on one side of the wavelength conversion layer is dispersed in a binder resin. Thus, the color conversion sheet uses environmentally safe organic phosphors by absorbing short-wavelength blue light that deteriorates organic phosphors without affecting the emission characteristics of the organic phosphors included in the wavelength conversion layer, has excellent color reproduction rate and luminance characteristics, undergoes little color change when irradiated with light and has excellent luminance reliability, not only at room temperature but also in high-temperature environments, and has excellent performance in terms of eye protection.

Fig. 1

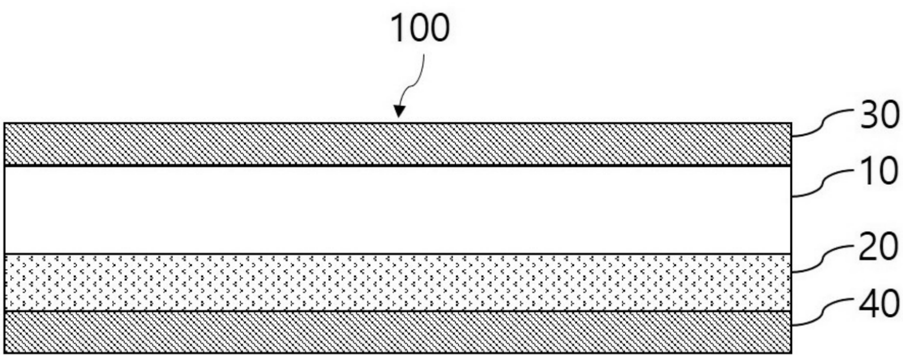




Processed by Luminess, 75001 PARIS (FR)

## Description

### Technical Field

The present invention relates to a color conversion sheet using an organic phosphor and a backlight unit including the same, and more specifically, to a color conversion sheet having a light absorption layer and a backlight unit including the same.

### Background Art

Conventionally, a liquid crystal display (LCD) device is a light-receiving device that does not emit light by itself to form an image, but instead forms an image by receiving incident light from an external source, and thus the LDC device requires a backlight unit (BLU) for emitting light on a rear surface thereof.

Recently, quantum dot technology has been widely applied to achieve high-quality images in LCDs. This technology offers the advantage of realizing a wide range of colors simply by adjusting the particle size of nano-inorganic particles, and also exhibits excellent stability even against light such as ultraviolet (UV). However, existing cadmium (Cd)-based nano-inorganic particles raise environmental concerns, and their vulnerability to moisture requires the use of a barrier film, which limits the selection of the base material and the combination with other optical films.

To address these problems, there has been considerable development in organic phosphors that can achieve high color gamut and excellent luminance characteristics without including cadmium-based nano-inorganic particles. Organic phosphors offer superior luminescence efficiency compared to the nano-inorganic particles applied in quantum dot technology and can realize a variety of emission characteristics even with the same phosphor by changing surrounding chemical substances. Moreover, organic phosphors are relatively resilient to moisture, so application of a barrier film is not necessary, which facilitates the use of various substrates and the combination with other optical films.

However, in the case of organic phosphors, although they may emit light by absorbing light irradiated from the blue light-emitting diode (LED) of the display, deterioration may progress due to short-wavelength blue light that cannot be absorbed, which may reduce the light durability of the display. In addition, short-wavelength blue light reaches the retina of the human eye and causes retinal dysfunction, leading to deterioration of eyesight, and therefore the development of technologies capable of removing such light is required.

### Detailed Description of the Invention

### Technical problem

The present invention is conceived to solve the aforementioned problems and to meet the conventional requirements, and an object to be achieved by the present invention is to provide a color conversion sheet and a backlight unit including the same, which absorb short-wavelength blue light that causes deterioration of organic phosphors, without affecting the emission characteristics of organic phosphors included in a wavelength conversion layer, thereby allowing the application of environmentally safe organic phosphors, and which also exhibit an excellent color gamut and luminance characteristics, undergo little color change and have excellent luminance reliability upon light irradiation not only at room temperature but also in high-temperature environments, and provide excellent performance also in terms of protecting eyesight.

The above and other objects and advantages of the present invention will become more apparent from the following description of preferred embodiments.

### Technical Solution

The above object is achieved by a color conversion sheet including a wavelength conversion layer in which an organic phosphor is dispersed in a resin matrix and a light absorption layer which is located on one surface of the wavelength conversion layer and in which an organic light absorber is dispersed in a binder resin, wherein the light absorption layer shields 60% or more of a wavelength region of 410 nm or less, shields 10% or more of a wavelength region of 430 nm or more, and transmits 80% or more of a wavelength region of 460 nm or more.

Preferably, the light absorption layer may have a maximum light emission peak in a wavelength range of 440 nm to 470 nm, and when monomodal light having a full width at half maximum of 40 nm or less is incident, light transmitted from the color conversion sheet satisfies Equation 1 below.

(Equation 1)

$$T1/B1 \geq 0.6$$

B1: Light emission intensity of the incident light at maximum light emission peak
T1: Light emission intensity of the transmitted light at maximum light emission peak

Preferably, the light absorption layer may have a maximum light emission peak in a wavelength range of 440 nm to 470 nm, and when monomodal light having a full width at half maximum of 40 nm or less is incident, light transmitted from the color conversion sheet satisfies Equation 2 below.

(Equation 2)

$$TS1/TS2 \leq 0.9$$

TS1: Light emission intensity of light transmitted at a position having a relatively lower wavelength among two positions where light emission intensity of the incident light becomes one-half of maximum light emission intensity
TS2: Light emission intensity of light transmitted at a position having a relatively higher wavelength among two positions where light emission intensity of the incident light becomes one-half of maximum light emission intensity.

Preferably, the organic light absorber may comprise at least one selected from among anthracene-based, tetracene-based, coumarin-based, porphyrin-based, diazaporphyrin-based, pyrromethene-based, and benzotriazole-based compounds.

Preferably, the binder resin of the light absorption layer may comprise at least one resin selected from among ester-based, olefin-based, acrylic-based, ether-based, urethane-based, carbonate-based, silicone-based, and epoxy-based resins.

Preferably, the light absorption layer may comprise 0.1 to 40 parts by weight of the organic light absorber based on 100 parts by weight of the binder resin.

Preferably, the light absorption layer may further comprise at least one selected from among an ultraviolet (UV) absorber, a UV stabilizer, and an antioxidant.

Preferably, the organic phosphor may comprise at least one of a green organic phosphor or a red organic phosphor.

Preferably, the resin matrix of the wavelength conversion layer may comprise at least one resin selected from among ester-based, olefin-based, acrylic-based, ether-based, urethane-based, carbonate-based, and imide-based resins.

Preferably, the wavelength conversion layer may comprise 0.0001 to 10 parts by weight of the organic phosphor based on 100 parts by weight of the resin matrix.

Preferably, the resin matrix of the wavelength conversion layer may have a glass transition temperature (Tg) of 50°C to 150°C.

Preferably, a change in luminance L value of the color conversion sheet may be less than 1% after 100 hours under a temperature condition of 60°C.

Preferably, the light absorption layer may be located in a direction in which light is irradiated onto the wavelength conversion layer.

Preferably, the color conversion sheet may further comprise a polyester first base layer located on the other surface of the wavelength conversion layer.

Preferably, the color conversion sheet may further comprise a polyester second base layer located between the wavelength conversion layer and the light absorption layer or on a surface of the light absorption layer.

In addition, the above object is achieved by a backlight unit including the above-described color conversion sheet.

**Advantageous Effects**

According to a color conversion sheet and a backlight unit including the same of the present invention, a color conversion sheet additionally includes a light absorption layer that absorbs short-wavelength blue light irradiated from a blue light-emitting diode (LED) on one surface of a wavelength conversion layer in which an organic phosphor is dispersed, thereby preventing the organic phosphor from being deteriorated by high-energy short-wavelength blue light and thus solving problems such as color coordinate change or reliability degradation.

In addition, according to the color conversion sheet and the backlight unit including the same of the present invention, the light absorption layer absorbs only short-wavelength blue light that does not affect the emission characteristics of the organic phosphor, thereby solving problems of change in luminance characteristics and color change due to deterioration of the organic phosphor caused by absorption of blue light, and also solving problems of deterioration of eyesight caused by blue light.
However, the effects of the present invention are not limited to the effects mentioned above, and other effects not mentioned will be clearly understood by those skilled in the art from the description below.

## Brief Description of Drawings

FIG. 1 is a cross-sectional view of a color conversion sheet according to an embodiment of the present invention.
FIG. 2 is a cross-sectional view of a color conversion sheet according to another embodiment of the present invention.
FIG. 3 is a schematic diagram of a backlight unit including a color conversion sheet according to an embodiment of the present invention.

## Mode for Invention

Hereinafter, embodiments of the present invention will be described in detail with reference to the accompanying drawings so as to be easily practiced by a person of ordinary skill in the art. It should be, however, understood that the present invention is not to be construed as limited to the embodiments set forth herein and may be embodied in many different forms.
For clarity of illustration, components unrelated to the description are omitted from the drawings, and identical or similar components are denoted by the same reference numerals throughout the specification. Furthermore, the thicknesses of layers and regions are exaggerated in the drawings to better illustrate their structure. When this specification states that one element is disposed "on" or "over" another element, it may be either directly on the other element or with one or more intervening elements therebetween. Conversely, when it is stated that one element is disposed "directly on" or "directly above" another element, no intervening elements are present.
Unless defined otherwise, all technical and scientific terms used herein have the same meanings as those commonly understood by those skilled in the art. In case of conflict, the present specification, including definitions, will be prior to others. In addition, although methods and materials similar or equivalent to those described herein may be used in the practice or testing of the present disclosure, suitable methods and materials are described herein.
In this specification, the terms "~-based resin", "~-based polymer", and/or "~-based copolymer" are used broadly to include "~ resin", "~ polymer", "~ copolymer", and/or derivatives thereof. Furthermore, the expression "polymer or copolymer crosslinked with these resins" refers to a polymer or copolymer crosslinked with any of the aforementioned resins.
As used in this specification, the term 'compound' is a broad concept that includes "monatomic molecules," "oligomers," and "polymer compounds including homopolymers and copolymers."
As used herein, the term "comprising" does not exclude the presence of other components unless explicitly stated otherwise, and typically indicates the possibility of additional components.
As used herein, the term "combination of these" refers to any mixture or combination of one or more of the components described above.
As used herein, the term "and/or" is meant to include any combination and all combinations of one or more of the items described herein. As used herein, the term "or" means "and/or." The expressions "at least one" or "one or more" preceding elements herein may supplement the entire list of elements and do not imply that they supplement individual elements described above.
Unless stated otherwise in this specification, all percentages, parts, ratios, and the like are based on weight. Further, when an amount, concentration, or other value or parameter is given in one of a range, a preferred range, and a list of preferred upper and lower limits, this should be understood to specifically disclose all ranges formed from any pair of any upper range limit or desired value and any lower range limit or desired value, regardless of whether the ranges are disclosed separately.
When a range of numerical values is mentioned herein, unless stated otherwise, the range is intended to include endpoints and all integers and fractions within the range. It is intended that the scope of the present disclosure not be limited to the specific values mentioned when defining a range.
In this specification, each component is a concept that includes both singular and plural.
Hereinafter, a color conversion sheet according to the present invention will be described in detail with reference to the drawings.

Referring to FIG. 1, which is a cross-sectional view of a color conversion sheet according to an embodiment of the present invention, a color conversion sheet 100 according to an embodiment of the present invention includes a wavelength conversion layer 10 in which an organic phosphor is dispersed in a resin matrix, and a light absorption layer 20 which is located on one surface of the wavelength conversion layer 10 and in which an organic light absorber is dispersed in a binder resin. In this case, the light absorption layer 20 may be formed by applying or printing a light absorption composition to one surface of the wavelength conversion layer 10.

In an embodiment, the light absorption layer 20 transmits blue light necessary for emitting light from the organic phosphor of the wavelength conversion layer 10, while shielding high-energy short-wavelength blue light unnecessary for emitting light, thereby preventing the organic phosphor of the wavelength conversion layer 10 from being deteriorated by short-wavelength blue light. In addition, the light absorption layer 20 also performs a function to prevent the organic phosphor in the wavelength conversion layer 10 from being deteriorated by undesirable factors such as moisture and oxygen in the air when the wavelength conversion layer 10 is exposed externally. In addition, by shielding high-energy short-wavelength blue light unnecessary for the emission of organic phosphor of the wavelength conversion layer 10, the light absorption layer 20 not only prevents color change and degradation of brightness characteristics of the display, but also performs a function of solving the problem of deterioration of eyesight caused by blue light generated during long-term use of the display.

In order to implement the function of the light absorption layer 20 as described above, it is preferable that the light absorption layer 20 in the present invention shields 60% or more of a wavelength region of 410 nm or less, shields 10% or more of a wavelength region of 430 nm or more, and transmits 80% or more of a wavelength region of 460 nm or more. In addition, it is more preferable that the light absorption layer 20 shields 70% or more of the wavelength region of 410 nm or less, shields 20% or more of the wavelength region of 430 nm or more, and transmits 90% or more of the wavelength region of 460 nm or more.

This is because, when the light absorption layer 20 shields less than 60% of a wavelength region of 410 nm or less and shields less than 10% of a wavelength region of 430 nm, the organic phosphor of the wavelength conversion layer 10 undergoes deterioration over time due to high-energy short-wavelength blue light, resulting in color coordinate change and degradation of reliability, and the short-wavelength blue light that is not shielded passes through the display liquid crystal and reaches the human eye, thereby causing problems such as deterioration of eyesight.

On the other hand, when the light absorption layer 20 transmits less than 80% of the wavelength region of 460 nm or more, the amount of light required to emit light from the organic phosphor of the wavelength conversion layer 10 may be reduced, thereby lowering the luminescence efficiency of the organic phosphor. In addition, when the light absorption layer 20 transmits less than 80% of a wavelength region of 460 nm or more, a portion of green or red light emitted from the organic phosphor of the wavelength conversion layer 10 and recycled by an optical sheet may be absorbed by the light absorption layer 20, thereby causing color change and deterioration of luminance characteristics.

In addition, it is preferable that the light absorption layer 20 has a light emission intensity that satisfies Equations 1 and 2 below.

First, the light absorption layer 20 preferably has a maximum light emission peak in a wavelength range of 440 nm to 470 nm, and when monomodal light having a full width at half maximum of 40 nm or less is incident, the transmitted light preferably exhibits optical characteristics that satisfies Equation 1 below.

(Equation 1)

$$T1/B1 \geq 0.6$$

B1: Light emission intensity of incident light at the maximum light emission peak
T1: Light emission intensity of transmitted light at the maximum light emission peak

As shown in Equation 1, it is preferable that the ratio of the light emission intensity of the light incident on the light absorption layer 20 at the maximum light emission peak to the light emission intensity of the transmitted light at the maximum light emission peak is 0.6 or more. This is because, when the ratio between these two is less than 0.6, excessive absorption takes place not only in the short-wavelength blue light region but also in the long-wavelength blue light region of 440 nm or more, which is required for emission of the organic phosphor of the wavelength conversion layer 10, thereby significantly lowering the luminescence efficiency of the organic phosphor.

In addition, it is preferable that the light absorption layer 20 has a maximum light emission peak in a wavelength range of 440 nm to 470 nm and when monomodal light having a full width at half maximum of 40 nm or less is incident, the transmitted light preferably exhibits optical characteristics that satisfies Equation 2 below.

(Equation 2)

$$TS1/TS2 \leq 0.9$$

TS1: Light emission intensity of light transmitted at a position having a relatively lower wavelength among two positions where the light emission intensity of the incident light becomes one-half of the maximum light emission intensity.

TS2: Light emission intensity of light transmitted at a position having a relatively higher wavelength among two positions where the light emission intensity of the incident light becomes one-half of the maximum light emission intensity.

That is, in Equation 2, TS1 and TS2 respectively represent the light emission intensity TS1 of light transmitted at a position having a relatively low wavelength and the light emission intensity TS2 of light transmitted at a position having a relatively high wavelength among the two positions that define the full width at half maximum. For example, when the maximum light emission intensity of the incident light is located at a wavelength of 460 nm and the full width at half maximum is 20 nm, TS1 represents the light emission intensity at a wavelength of 450 nm, and TS2 represents the light emission intensity at 470 nm. In addition, when the maximum light emission intensity of the incident light is located at a wavelength of 450 nm and the full width at half maximum is 10 nm, TS1 represents the light emission intensity at a wavelength of 445 nm, and TS2 represents the emission intensity at 455 nm.

As shown in Equation 2, the difference in light emission intensity of the transmitted light at the short wavelength position and the long wavelength position corresponding to one-half of the maximum light emission intensity of the light incident on the light absorption layer 20 is preferably 0.9 or less, and more preferably 0.8 or less. This is because the light absorption layer 20 shields short-wavelength blue light and selectively transmits long-wavelength blue light, thereby preventing deterioration of the organic phosphor included in the wavelength conversion layer 10 while also preventing a decrease in luminescence efficiency. On the other hand, when Equation 2 exceeds 0.9, it becomes difficult to expect a shielding effect for short-wavelength blue light from the light absorption layer 20, and when it exceeds 1.0, the shielding of long-wavelength blue light required for emission of the organic phosphor becomes greater than the shielding of short-wavelength blue light, which may significantly reduce the luminescence efficiency of the organic phosphor.

The organic light absorber of the light absorption layer 20 according to an embodiment of the present invention preferably includes at least one selected from among anthracene-based, tetracene-based, coumarin-based, porphyrin-based, diazaporphyrin-based, pyrromethene-based, and benzotriazole-based compounds.

In addition, the binder resin of the light absorption layer 20 not only fixes the organic light absorber but also prevents exposure to moisture or oxygen, thereby functioning to increase the stability of the organic light absorber dispersed in the light absorption layer 20. Such a binder resin of the light absorption layer 20 preferably includes at least one resin selected from among ester-based, olefin-based, acrylic-based, ether-based, urethane-based, carbonate-based, silicone-based, and epoxy-based resins.

In an embodiment, the light absorption layer 20 preferably includes 0.1 to 40 parts by weight of the organic light absorber based on 100 parts by weight of the binder resin, and more preferably 0.5 to 40 parts by weight. This is because, when the organic light absorber is less than 0.1 parts by weight, the shielding efficiency of short-wavelength blue light in the light absorption layer 20 is reduced, making it impossible to prevent deterioration of the organic phosphor of the wavelength conversion layer 10, and when the organic light absorber is more than 40 parts by weight, shielding efficiency of short-wavelength blue light in the light absorption layer 20 does not substantially increase further, but only increases the manufacturing cost, and the light transmission efficiency of the light absorption layer 20 decreases, thereby reducing the luminescence efficiency of the organic phosphor of the wavelength conversion layer 10.

In addition, the light absorption layer 20 may further include at least one selected from among an ultraviolet (UV) absorber, a UV stabilizer, and an antioxidant. The UV absorber and the UV stabilizer function to prevent deterioration of the organic light absorber of the light absorption layer 20 and the organic phosphor of the wavelength conversion layer 10 from UV in natural light when the color conversion sheet 100 is stored outdoors, and the antioxidant functions to remove radicals that may be generated by deterioration of the organic light absorber of the light absorption layer 20 in the process of absorbing light, thereby prevent chain deterioration of other organic light absorbers caused by radicals.

In an embodiment, the wavelength conversion layer 10 is located on one surface of the light absorption layer 20 and includes an organic phosphor dispersed in a resin matrix.

The resin matrix of the wavelength conversion layer 10 not only fixes the organic phosphor but also prevents exposure to moisture or oxygen, thereby functioning to prevent deterioration of the organic phosphor dispersed in the resin matrix. Such a resin matrix of the wavelength conversion layer 10 includes at least one resin selected from among ester-based, olefin-based, acrylic-based, ether-based, urethane-based, carbonate-based, and imide-based resins.

In addition, the resin contained in the resin matrix preferably has a number average molecular weight (Mn) of

1,000 to 50,000 g/mol or a weight average molecular weight (Mw) of 50,000 to 2,000,000 g/mol. This is because if the number average molecular weight of the resin contained in the resin matrix is less than 1,000 g/mol or the weight average molecular weight is less than 50,000 g/mol, it is difficult to immobilize the organic phosphors, which may lead to temperature-induced aggregation of the organic phosphors and subsequent deterioration of their optical properties. On the other hand, if the number average molecular weight exceeds 50,000 g/mol or the weight average molecular weight exceeds 2,000,000 g/mol, the resin matrix may have poor solubility in the solvent, making it challenging to form the wavelength conversion layer 10.

In addition, the acid value of the resin contained in the resin matrix may be 0 to 15 mgKOH/g, and preferably 0 to 10 mgKOH/g. Also, the hydroxyl value of the resin contained in the resin matrix may be 0 to 30 mgKOH/g, preferably 0 to 20 mgKOH/g, and more preferably 0 to 10 mgKOH/g. In general, ester-based resins, olefin-based resins, acrylic-based resins, ether-based resins, urethane-based resins, carbonate-based resins, and imide-based resins can be applied as the resin matrix for the wavelength conversion layer included in the color conversion sheet, and functional groups, such as hydroxyl groups or carboxylic acid groups, present in these resins accelerate the deterioration of the organic phosphors dispersed in the resin matrix, which may reduce the reliability of the organic phosphors. Therefore, it is preferable to keep the acid value and hydroxyl value in the aforementioned range.

More specifically, the resin matrix included in the wavelength conversion layer 10 may include at least one of polyester, modified polyester, polyethylene, polycyclo-olefin, poly(methyl) methacrylate, polyethylene glycol, polyurethane, polycarbonate, or polyimide, and may include block copolymers thereof.

**In** addition, the resin matrix included in the wavelength conversion layer 10 may have a glass transition temperature (Tg) of 50°C to 150°C, preferably 60°C to 140°C, and more preferably 70°C to 140°C. When the glass transition temperature of the resin matrix is less than 50°C, aggregation of the plurality of organic phosphors may occur over time in an environment of high temperature or high temperature and high humidity, leading to deterioration in optical characteristics, and when the glass transition temperature exceeds 150°C, the resin may have poor solubility in a solvent due to high crystallinity of the resin in general, and curling of a substrate-film may occur due to crystallization of the resin when drying after coating the substrate film with the resin.

In one embodiment, the organic phosphor dispersed in the resin matrix of the wavelength conversion layer 10 is a phosphor that emits light of a different wavelength from that of excitation light upon irradiation of the excitation light. The wavelength conversion layer 10 may include a single green or red phosphor depending on the objective, or it may emit light of various colors through combinations of green and red phosphors.

Within the single wavelength conversion layer, a plurality of the same-colored organic phosphors may be included, emitting only one color, wherein the plurality of organic phosphors may be of the same material or different materials. For example, the wavelength conversion layer 10 may include only one organic phosphor from among a plurality of green organic phosphors or a plurality of red organic phosphors to emit only one color of light, and when an organic phosphor of one color is used in one wavelength conversion layer, two or more wavelength conversion layers each including an organic phosphor of a different color may be separately provided to emit light of various colors.

The organic phosphor may include compounds having a condensed aryl ring, such as naphthalene, anthracene, phenanthrene, pyrene, chrysene, triphenylene, perylene, fluoranthene, fluorene, indene, etc., or derivatives thereof (e.g., 2-(benzothiazol-2-yl)-9,10-diphenylanthracene 5,6,11,12-tetraphenylnaphthacene, etc.), compounds having a heteroaryl ring such as furan, pyrrole, thiophene, silol, 9-silafluorene, 9,9'-spirobisilafluorene, benzothiophene, benzofuran, indole, dibenzothiophene, dibenzofuran, imidazopyridine, phenanthroline, pyridine, pyrazine, naphthyridine, quinoxaline, pyrrolopyridine, thioxanthene, etc., or derivatives thereof, borane derivatives, distyrylbenzene derivatives, aminostyryl derivatives, such as 4,4'-bis(2-(4-diphenylaminophenyl)ethenyl)biphenyl, 4,4'-bis(N-(stilben-4-yl)-N-phenylamino)stilbene, etc., aromatic acetylene derivatives, tetraphenyl butadiene derivatives, stilbene derivatives, aldazine derivatives, pyromethene derivatives, coumarin derivatives, such as diketopyrrolo[3,4-c]pyrrole derivatives, 2,3,5,6-1H,4H-tetrahydro-9-(2'-benzothiazolyl)quinolizino[9,9a,1-gh]coumarin, etc., azole derivatives and metal complexes thereof, such as imidazole, thiazole, thiadiazole, carbazole, oxazole, oxadiazole, triazole, etc., and aromatic amine derivatives represented by N,N'-diphenyl-N,N'-di(3-methylphenyl)-4,4'-diphenyl-1,1'-diamine.

As an organic phosphor according to an embodiment of the present invention, a green organic phosphor may absorb blue light and emit green light, and may include a compound represented by Formula 1 below.

(Formula 1)

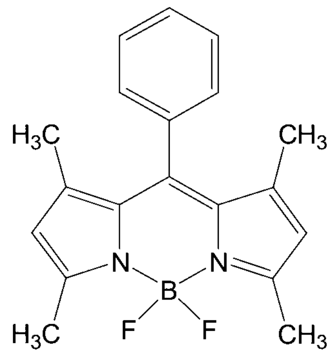

Additionally, the wavelength conversion layer 10 may include a red organic phosphor dispersed in a resin matrix. The red organic phosphor dispersed in the resin matrix of the wavelength conversion layer may absorb blue light or green light and emit red light, and the red organic phosphor may include a compound represented by Formula 2 below.

(Formula 2)

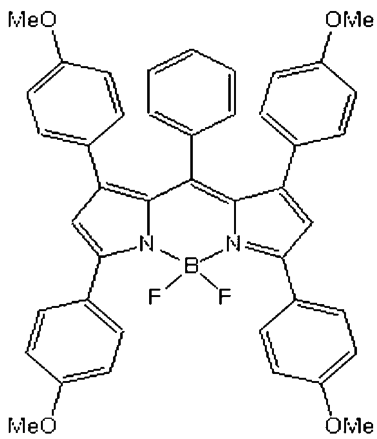

The above-described organic phosphors (green organic phosphor and/or red organic phosphor) are preferably included in an amount of 0.0001 to 10 parts by weight based on 100 parts by weight of resin solid content of the resin matrix. This is because, when the organic phosphor is included in an amount of less than 0.0001 parts by weight, the color conversion effect to a desired color through the color conversion sheet 100 may be insignificant, whereas when the amount exceeds 10 parts by weight, a quenching phenomenon may occur due to interactions such as aggregation of the organic phosphors.

In addition, the thickness of the wavelength conversion layer 10 including the organic phosphor dispersed in the resin matrix is preferably 1 μm to 150 μm, more preferably 1 μm to 100 μm, and even more preferably 1 μm to 50 μm. This is because, when the thickness of the wavelength conversion layer 10 exceeds 150 μm, sufficient solvent removal becomes difficult, and deterioration of the organic phosphor may occur due to various solvents remaining in the wavelength conversion layer 10, whereas when the thickness is less than 1 μm, the wavelength conversion layer cannot perform its function.

In the color conversion sheet according to an embodiment of the present invention, the light absorption layer 20 is preferably located in a direction in which light is irradiated onto the wavelength conversion layer 10. That is, it is preferable that the light absorption layer 20 is located on a surface of the wavelength conversion layer 10 closer to a light source. This is because, when the light absorption layer 20 is located in the direction in which light is irradiated, short-wavelength blue light among blue light irradiated from the light source to the wavelength conversion layer 10 is shielded in advance, thereby more effectively preventing deterioration of the organic phosphor of the wavelength conversion layer 10.

In addition, at least one surface of the wavelength conversion layer 10 and the light absorption layer 20 in contact with the outside may further include base layers 30 and 40 as necessary. In the color conversion sheet 100 illustrated in FIG. 1, a first base layer 30 is located on the surface of the wavelength conversion layer 10 opposite to the surface on which the light absorption layer 20 is formed, i.e., on the outer surface of the wavelength conversion layer 10, and a second base layer 40 is located on the surface of the light absorption layer 20. In this way, in the color conversion sheet 100 according to FIG. 1, the first base layer 30 and the second base layer 40 are located on the outside of the wavelength conversion layer

10 and the light absorption layer 20, thereby protecting the wavelength conversion layer 10 and the light absorption layer 20 from the outside.

The first base layer 30 and the second base layer 40 may be transparent and flexible polymer films, and may be, for example, polymer films such as polyethylene terephthalate, polyethylene naphtalate, polyacrylate, polycarbonate, polyetherimide, and polyimide, but are not limited thereto, and various polymer films may be applied.

Here, the first base layer 30 and the second base layer 40 may be diffusion films (sheets), prism sheets, or the like, but are not limited thereto, and sheets having various functions may be applied.

With such a configuration, the color conversion sheet according to an embodiment of the present invention can achieve a change in luminance L value of less than 1% after 100 hours under a temperature condition of 60°C. When the change in luminance L value is 1% or more, this indicates that deterioration of the organic phosphor over time is significant, and the reliability of the color conversion sheet is degraded.

Next, with reference to FIG. 2, which is a cross-sectional view of a color conversion sheet according to another embodiment of the present invention, a color conversion sheet according to another embodiment of the present invention will be described, and a description of configurations overlapping configuration with those of FIG. 1 will be omitted.

Referring to FIG. 2, a color conversion sheet 200 according to another embodiment of the present invention illustrated in FIG. 2 includes a second base layer 40 formed between a wavelength conversion layer 10 and a light absorption layer 20, and a first base layer 30 may be formed on the outer surface of the wavelength conversion layer 10 as necessary.

As such, the color conversion sheet 200 according to another embodiment of the present invention illustrated in FIG. 2 has the first base layer 30 and the second base layer 40 directly formed on both surfaces of the wavelength conversion layer 10, thereby protecting an organic phosphor included in the wavelength conversion layer 10 from moisture or air from the outside, and, as necessary, the first base layer 30 and the second base layer 40 may have back-coating particles mixed therein to function as a back-coating layer.

Next, a backlight unit including a color conversion sheet according to an embodiment of the present invention will be described with reference to FIG. 3, which is a schematic diagram of a backlight unit including a color conversion sheet according to an embodiment of the present invention.

Referring to FIG. 3, a backlight unit 900 including a color conversion sheet according to an embodiment of the present invention may include a light source 700, a reflector 500 that reflects light emitted from the light source 700 to increase light efficiency, a light guide plate 300 positioned above the reflector 500 and configured to evenly spread the light emitted from the light source 700, and a color conversion sheet 100 positioned above the light guide plate 300. Here, the color conversion sheet shown in FIG. 1 or 2 may be applied.

In this case, it is preferable that the light absorption layer 20 of the color conversion sheet 100 is located in a direction closer to the light source 700 with respect to the wavelength conversion layer 10, that is, in the direction in which light is incident from the light source 700, so that short-wavelength blue light among blue light irradiated onto the wavelength conversion layer 10 is shielded in advance, thereby more effectively preventing deterioration of the organic phosphor of the wavelength conversion layer 10.

The light source 700 illustrated in FIG. 3 preferably includes at least one light source selected from an edge-type light source, a side-type light source, and a direct-type light source, but is not limited thereto, and various light sources may be used.

Additionally, at least one optical sheet, for example, a diffusion sheet, a prism sheet, a dual brightness enhancement film (DBEF), or the like, may be further included on an upper portion (surface) of the color conversion sheet 100.

Hereinafter, the configuration of the present invention and effects thereof will be described in more detail through Examples and Comparative Examples. However, the following examples are provided to illustrate further the present invention and are not intended to limit the scope of the present invention.

**[Example]**

**[Example** 1]

**Step 1: Formation of Wavelength Conversion Layer**

A green organic phosphor according to Formula 1 described above was dissolved in methyl ethyl ketone to prepare an organic phosphor solution, and then the organic phosphor solution was mixed with a polyester resin in which polyester chips (Es-120 by SK Chemicals) having an acid value of 3 mgKOH/g or less and a hydroxyl value of 2 to 6 mgKOH/g were dissolved in methyl ethyl ketone. Methyl ethyl ketone was further added to adjust the viscosity to 150 cps, and then the mixture was stirred at 150 rpm for 30 minutes to prepare a wavelength conversion layer composition. At this time, the green organic phosphor was added in an amount of 0.4 parts by weight based on 100 parts by weight of the solid

content of polyester. Next, the wavelength conversion layer composition was bar-coated onto the opposite side of the diffusion layer of a diffusion film (TDF12C by Toray Advanced Materials Korea Inc. (TAK)), followed by drying at 120°C for 2 minutes to form a wavelength conversion layer with a thickness of 15 μm.

Step 2: **Formation of Light Absorption Layer**

Next, 50 parts by weight of toluene was added to a silicone-based resin (DC7663 by Dow Chemical Company) and stirred at 150 rpm for 2 hours. Subsequently, 0.5 parts by weight of a platinum catalyst (SYL-OFF 4000 CATALYST by Dow Chemical Company) was added, followed by additional stirring for 30 minutes, and then 40 parts by weight of a coumarin-based compound (Coumarin102 by Merck KGaA) was added based on 100 parts by weight of the solid content of silicone-based resin and stirred at 150 rpm for 30 minutes to prepare a light absorption layer composition. Next, the light absorption layer composition was bar-coated onto an upper portion of a polyethylene terephthalate film (PH8 by Toray Advanced Materials Korea Inc.), followed by drying at 170°C for 1 minute to form a light absorption layer having a thickness of 10 μm.

Step 3: **Manufacture of Color Conversion Sheet**

After the light absorption layer formed in Step 2 and the wavelength conversion layer formed in Step 1 were laminated in contact with each other, a color conversion sheet was prepared using a roll laminator (EXCELAM II-355Q by GMP Co., Ltd.).

[Example 2]

A color conversion sheet was prepared in the same manner as in Example 1, except that 20 parts by weight of a benzotriazole-based compound (Tinuvin 970 by BASF SE) was added as an organic light absorber based on 100 parts by weight of the solid content of the silicone-based resin.

**[Example** 3]

A color conversion sheet was prepared in the same manner as in Example 1, except that 0.3 parts by weight of a porphyrin-based compound (FDB-002 by Yamada Chemical Co., Ltd.) was added as an organic light absorber based on 100 parts by weight of the solid content of the silicone-based resin, and 1 part by weight of an organic light absorber (NUV-240 by Toyo Ink Co., Ltd.) was added based on 100 parts by weight of the solid content of the silicone-based resin.

[Example 4]

A color conversion sheet was prepared in the same manner as in Example 1, except that a polyester resin obtained by dissolving polyester (Vylon 630 by Toyobo Co., Ltd.) in methyl ethyl ketone was used for preparing the light absorption layer composition.

[Example 5]

A color conversion sheet was prepared in the same manner as in Example 1, except that 0.1 parts by weight of a porphyrin-based compound (FDB-002 by Yamada Chemical Co., Ltd.) was added as an organic light absorber based on 100 parts by weight of the solid content of the silicone-based resin.

**[Comparative Example]**

**[Comparative Example 1]**

A color conversion sheet was prepared in the same manner as in Example 1, except that the process of forming the light absorption layer was omitted and a polyethylene terephthalate film (PH8 by Toray Advanced Materials Korea Inc.) was directly laminated on the wavelength conversion layer.

**[Comparative Example 2]**

A color conversion sheet was prepared in the same manner as in Example 1, except that 0.01 parts by weight of a porphyrin-based compound (FDB-002 by Yamada Chemical Co., Ltd.) was added as an organic light absorber based on

100 parts by weight of the solid content of the silicone-based resin.

**[Comparative Example 3]**

A color conversion sheet was prepared in the same manner as in Example 1, except that 50 parts by weight of a coumarin-based compound (Coumarin 102 by Merck KGaA) was added as an organic light absorber based on 100 parts by weight of the solid content of the silicone-based resin.

**[Comparative Example 4]**

A color conversion sheet was prepared in the same manner as in Example 1, except that 10 parts by weight of a coumarin-based compound (Coumarin 153 by Merck KGaA) and 35 parts by weight of a benzotriazole-based compound (Tinuvin 970, BASF SE) were added as an organic light absorber based on 100 parts by weight of the solid content of the silicone-based resin.

The physical properties of the color conversion sheets prepared as described above for Examples 1 to 5 and Comparative Examples 1 to 4 were measured and evaluated according to the following Experimental Example, and the results are shown in Tables 1 to 3 below.

**[Experimental Example]**

**(1) Measurement of Light Transmittance**

The light transmittance of the light absorption layer in the color conversion sheets of Examples 1 to 5 and Comparative Examples 2 to 4 was measured before lamination with the wavelength conversion layer, using a configuration in which a polyethylene terephthalate film and a light absorption layer were laminated, by means of a spectrophotometer (MPC-3100 by Shimadzu Corporation). The light transmittance measured in wavelength regions of 410 nm, 430 nm, and 460 nm is shown in Table 1.

In addition, in Comparative Example 1, before laminating the wavelength conversion layer on the polyethylene terephthalate film, the light transmittance of the polyethylene terephthalate film itself was measured in the same manner and shown in Table 1.

Next, using the light transmittance measured in Comparative Example 1 (light transmittance of the polyethylene terephthalate film) as 100%, the relative ratio of the light transmittance measured in the configuration in which the polyethylene terephthalate film and the light absorption layer were laminated was calculated, and the result was recorded in Table 1 as the light transmittance of the light absorption layer.

**(2) Measurement of Change in Blue Light Spectrum (Light Emission Intensity)**

The change in blue light spectrum in the light absorption layer of the color conversion sheets of the Examples and Comparative Examples was measured before lamination of the light absorption layer with the wavelength conversion layer using a spectroradiometer (CA-S20W by Konica Minolta, Inc.). At this time, the color conversion sheet was tested in a backlight unit including a blue LED having a maximum light emission peak at a wavelength of 447 nm and a full width at half maximum of 18 nm and a light guide plate, in which the light absorption layer coated on the polyethylene terephthalate film was laminated on an upper surface of the light guide plate, and a prism sheet was further laminated on the upper surface of the light absorption layer.

Through this, the light emission intensity (B1) of the incident light at the maximum light emission peak, the light emission intensity (T1) of the transmitted light at the maximum light emission peak, the light emission intensity (TS1) of the transmitted light at the wavelength position of 438 nm (short wavelength) corresponding to one-half of the maximum light emission intensity of the incident light, and the light emission intensity (TS2) of the transmitted light at the wavelength position of 456 nm (long wavelength), which is a different position corresponding to one-half of the maximum light emission intensity of the incident light were measured, respectively.

**(3) Measurement of Luminance and Color Coordinate Change**

For the color conversion sheets of the Examples and Comparative Examples, initial luminance (L) and color coordinates (x, y) values were measured, and then color coordinate change ($\Delta x$, $\Delta y$) and luminance change ($\Delta Lv$) over 100 hours under a temperature condition of 60 °C were measured using a spectroradiometer (CA-S20W by Konica Minolta, Inc.). At this time, the experiment was performed by laminating the color conversion sheet on an upper surface of a light guide plate of a backlight unit including a blue LED having a wavelength of 447 nm and a light guide plate, and further

laminating a prism sheet on an upper surface of the color conversion sheet.

Table 1 shows the results of measuring the light transmittance of the light absorption layer of the Examples and Comparative Examples.

Table 1

| | Light transmittance: Unit: % Measured light transmittance (calculated light transmittance of light absorption layer) | | |
|---|---|---|---|
| | 410nm | 430nm | 460nm |
| Example 1 | 6.9(8.3) | 68.6(81.9) | 84.2(99.8) |
| Example 2 | 1.5(1.8) | 60.7(72.4) | 84.0(99.5) |
| Example 3 | 26.4(31.7) | 40.4(48.2) | 84.3(99.9) |
| Example 4 | 4.6(5.5) | 65.2(77.8) | 84.2(99.8) |
| Example 5 | 31.6(37.9) | 0.1(0.1) | 80.6(95.5) |
| Comparative Example 2 | 80.1 (96.0) | 82.9(98.9) | 84.3(99.9) |
| Comparative Example 3 | 6.5(7.8) | 67.4(80.4) | 84.1(99.6) |
| Comparative Example 4 | 0.4(0.5) | 21.4(25.5) | 53.8(63.7) |
| Comparative Example 1 (PET film) | 83.4(100) | 83.8(100) | 84.4(100) |

Among the light transmittances listed in Table 1 above, the values in parentheses represent the light transmittance of the light absorption layer, which was calculated as a relative ratio of the measured light transmittance with reference to the light transmittance of Comparative Example 1, which is the light transmittance of the PET film. As shown in Table 1 above, since the light transmittance was evaluated in a state in which the light absorption layer was coated on a PET film having a thickness of 100 μm, when compared relatively with the light transmittance of the PET film in each wavelength region set to 100%, it can be seen that Examples 1 to 5 satisfied the conditions of shielding 60% or more of a wavelength region of 410 nm or less, shielding 10% or more of a wavelength region of 430 nm, and transmitting 80% or more of a wavelength region of 460 nm or more.

In contrast, it can be confirmed that Comparative Example 2 had a very low shielding efficiency at 410 nm and 430 nm because the content of the organic light absorber was too low, and also that Comparative Example 3 showed that, even though the content of the organic light absorber was increased compared to Example 1, the increase in shielding rate at 410 nm and 430 nm was not significant.

In addition, it can be confirmed that Comparative Example 4 shielded 60% or more of a wavelength region of 410 nm or less and 10% or more of a wavelength region of 430 nm, but had a very low transmittance at the wavelength region of 460 nm.

Table 2 shows the results of measuring the blue light spectrum of the light absorption layer of the Examples and Comparative Examples.

Table 2

| | Intensity (W/sr/m$^2$) | | | | Intensity | |
|---|---|---|---|---|---|---|
| | B1 | T1 | TS1 | TS2 | T1/B1 | TS1/TS2 |
| Example 1 | 0.679 | 0.574 | 0.235 | 0.312 | 0.845 | 0.753 |
| Example 2 | | 0.526 | 0.201 | 0.299 | 0.775 | 0.672 |
| Example 3 | | 0.439 | 0.122 | 0.276 | 0.647 | 0.442 |
| Example 4 | | 0.558 | 0.224 | 0.308 | 0.822 | 0.727 |
| Example 5 | | 0.410 | 0.057 | 0.201 | 0.604 | 0.284 |
| Comparative Example 2 | | 0.677 | 0.335 | 0.338 | 0.997 | 0.991 |
| Comparative Example 3 | | 0.571 | 0.232 | 0.309 | 0.841 | 0.751 |
| Comparative Example 4 | | 0.273 | 0.073 | 0.113 | 0.402 | 0.646 |

As shown in Table 2 above, it can be seen that Examples 1 to 5 all satisfied Equations 1 and 2, and as a result, the long-wavelength blue light region of 440 nm or more, which is required for emission of the organic phosphor of the wavelength conversion layer 10, was not significantly absorbed, while the short-wavelength blue light was selectively and significantly shielded.

In contrast, Comparative Example 2 has a value close to 1.0 in Equation 2, indicating that no shielding effect for short-wavelength blue light. Comparative Example 3 satisfied both Equations 1 and 2, but showed almost no improvement in the shielding effect for short-wavelength blue light compared to Example 1, despite the increase in the content of the organic light absorber, while problems such as precipitation of the organic light absorber on the surface of the light absorption layer due to excessive increase in content, and the resultant increase in surface haze were observed, which may cause problems such as luminance reduction of the wavelength conversion layer.

In addition, Comparative Example 4 has a value less than 0.6 in Equation 1, indicating that not only the short-wavelength blue light region but also the long-wavelength blue light region of 440 nm or more, which is required for emission of the organic phosphor of the wavelength conversion layer 10, was excessively absorbed, thereby reducing the luminescence efficiency of the organic phosphor.

Table 3 shows the results of measuring changes in luminance and color coordinates in the Examples and Comparative Examples.

Table 3

| | | High temperature treatment time | |
|---|---|---|---|
| | | 0hr | 100hr |
| Example 1 | ΔL(measured value/initial value) | 100% | 99.2% |
| | Δx, Δy(measured value-initial value) | 0, 0 | -0.001, -0.002 |
| Example 2 | ΔL(measured value/initial value) | 100% | 99.6% |
| | Δx, Δy(measured value-initial value) | 0, 0 | 0.000, -0.001 |
| Example 3 | ΔL(measured value/initial value) | 100% | 100.2% |
| | Δx, Δy(measured value-initial value) | 0, 0 | +0.001, +0.001 |
| Example 4 | ΔL(measured value/initial value) | 100% | 99.3% |
| | Δx, Δy(measured value-initial value) | 0, 0 | 0.000, -0.002 |
| Example 5 | ΔL(measured value/initial value) | 100% | 100.1% |
| | Δx, Δy(measured value-initial value) | 0, 0 | 0.000, +0.001 |
| Comparative Example 1 | ΔL(measured value/initial value) | 100% | 95.2% |
| | Δx, Δy(measured value-initial value) | 0, 0 | -0.002, -0.010 |
| Comparative Example 2 | ΔL(measured value/initial value) | 100% | 95.9% |
| | Δx, Δy(measured value-initial value) | 0, 0 | -0.002, -0.009 |
| Comparative Example 3 | ΔL(measured value/initial value) | 100% | 99.3% |
| | Δx, Δy(measured value-initial value) | 0, 0 | 0.000, -0.002 |
| Comparative Example 4 | ΔL(measured value/initial value) | 100% | 96.1% |
| | Δx, Δy(measured value-initial value) | 0, 0 | -0.003, -0.008 |

As shown in Table 3 above, Examples 1 to 5 showed that the light absorption layer satisfied both Equations 1 and 2, and it can be confirmed that even after 100 hours of treatment under a temperature condition of 60°C, changes in the color coordinates on both the x-axis and y-axis were within ±0.005.

In contrast, it can be confirmed that Comparative Example 1, which did not include a light absorption layer, showed a change value of - 0.002 on the x-axis and - 0.010 on the y-axis, which were the largest among all of the Examples and Comparative Examples.

In addition, Comparative Example 2, in which the light absorption layer did not satisfy Equation 2, exhibited a considerable change in color coordinates compared to Examples 1 to 5, and Comparative Example 3 satisfied both Equations 1 and 2, but showed very little improvement in color coordinate change compared to Example 1, despite the increased content of the organic light absorber. Furthermore, it can be confirmed that Comparative Example 4 did not

satisfy Equation 1, resulting in reduced luminescence efficiency of the organic phosphor and relatively greater change in color coordinates compared to Examples 1 to 5.

As described above, it can be confirmed that Comparative Examples in which the light absorption layer did not satisfy Equation 1 and/or Equation 2 exhibited greater changes in color coordinates compared to Examples 1 to 5, in which the light absorption layer satisfied both Equation 1 and Equation 2.

In addition, Examples 1 to 5 all exhibited luminance changes of less than 1% after 100 hours of treatment under a temperature condition of 60°C, whereas Comparative Example 1, which did not include a light absorption layer, exhibited decreased luminance and a luminance change of 4.8% after 100 hours of treatment, and Comparative Example 2, in which the light absorption layer did not satisfy Equation 2, also exhibited decreased luminance and a luminance change of 4.1% after 100 hours of treatment. Comparative Example 3 satisfied both Equations 1 and 2, but showed very little improvement in luminance change compared to Example 1, despite the increased content of the organic light absorber.

As such, it was confirmed that, in the case of a color conversion sheet without a light absorption layer as in Comparative Example 1, or the case of a color conversion sheet in which Equation 2 was not satisfied as in Comparative Example 2, significant color change and luminance change occurred in a high-temperature environment. On the contrary, when the light absorption layer satisfied both Equations 1 and 2, it can be confirmed that changes in color coordinates and luminance change were small even in a high-temperature environment.

The color conversion sheet according to the present invention as described above additionally includes a light absorption layer that prevents deterioration of an organic phosphor caused by light, and selectively shields short-wavelength blue light while transmitting long-wavelength blue light, thereby preventing deterioration of the organic phosphor while also preventing a decrease in luminous efficiency. Accordingly, the present invention provides a technical effect of solving problems of changes in luminance characteristics and color change due to deterioration of the organic phosphor and variation in luminescence efficiency.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A color conversion sheet comprising:

   a wavelength conversion layer in which an organic phosphor is dispersed in a resin matrix; and
   a light absorption layer which is located on one surface of the wavelength conversion layer and in which an organic light absorber is dispersed in a binder resin,
   wherein the light absorption layer shields 60% or more of a wavelength region of 410 nm or less, shields 10% or more of a wavelength region of 430 nm or more, and transmits 80% or more of a wavelength region of 460 nm or more.

2. The color conversion sheet of claim 1, wherein the light absorption layer has a maximum light emission peak in a wavelength range of 440 nm to 470 nm, and when monomodal light having a full width at half maximum of 40 nm or less is incident, light transmitted from the color conversion sheet satisfies Equation 1 below:

   (Equation 1)

   $$T1/B1 \geq 0.6$$

   B1: Light emission intensity of the incident light at maximum light emission peak
   T1: Light emission intensity of the transmitted light at maximum light emission peak

3. The color conversion sheet of claim 1, wherein the light absorption layer has a maximum light emission peak in a wavelength range of 440 nm to 470 nm, and when monomodal light having a full width at half maximum of 40 nm or less is incident, light transmitted from the color conversion sheet satisfies Equation 2 below:

   (Equation 2)

   $$TS1/TS2 \leq 0.9$$

TS1: Light emission intensity of light transmitted at a position having a relatively lower wavelength among two positions where light emission intensity of the incident light becomes one-half of maximum light emission intensity
TS2: Light emission intensity of light transmitted at a position having a relatively higher wavelength among two positions where light emission intensity of the incident light becomes one-half of maximum light emission intensity.

4. The color conversion sheet of claim 1, wherein the organic light absorber comprises at least one selected from among anthracene-based, tetracene-based, coumarin-based, porphyrin-based, diazaporphyrin-based, pyrromethene-based, and benzotriazole-based compounds.

5. The color conversion sheet of claim 1, wherein the binder resin of the light absorption layer comprises at least one resin selected from among ester-based, olefin-based, acrylic-based, ether-based, urethane-based, carbonate-based, silicone-based, and epoxy-based resins.

6. The color conversion sheet of claim 1, wherein the light absorption layer comprises 0.1 to 40 parts by weight of the organic light absorber based on 100 parts by weight of the binder resin.

7. The color conversion sheet of claim 1, wherein the light absorption layer further comprises at least one selected from among an ultraviolet (UV) absorber, a UV stabilizer, and an antioxidant.

8. The color conversion sheet of claim 1, wherein the organic phosphor comprises at least one of a green organic phosphor or a red organic phosphor.

9. The color conversion sheet of claim 1, wherein the resin matrix of the wavelength conversion layer comprises at least one resin selected from among ester-based, olefin-based, acrylic-based, ether-based, urethane-based, carbonate-based, and imide-based resins.

10. The color conversion sheet of claim 1, wherein the wavelength conversion layer comprises 0.0001 to 10 parts by weight of the organic phosphor based on 100 parts by weight of the resin matrix.

11. The color conversion sheet of claim 1, wherein the resin matrix of the wavelength conversion layer has a glass transition temperature (Tg) of 50° C. to 150° C.

12. The color conversion sheet of claim 1, wherein a change in luminance L value of the color conversion sheet is less than 1% after 100 hours under a temperature condition of 60° C.

13. The color conversion sheet of claim 1, wherein the light absorption layer is located in a direction in which light is irradiated onto the wavelength conversion layer.

14. The color conversion sheet of claim 1, further comprising a polyester first base layer located on the other surface of the wavelength conversion layer.

15. The color conversion sheet of claim 14, further comprising a polyester second base layer located between the wavelength conversion layer and the light absorption layer or on a surface of the light absorption layer.

16. A backlight unit comprising the color conversion sheet according to claim 1.

Fig. 1

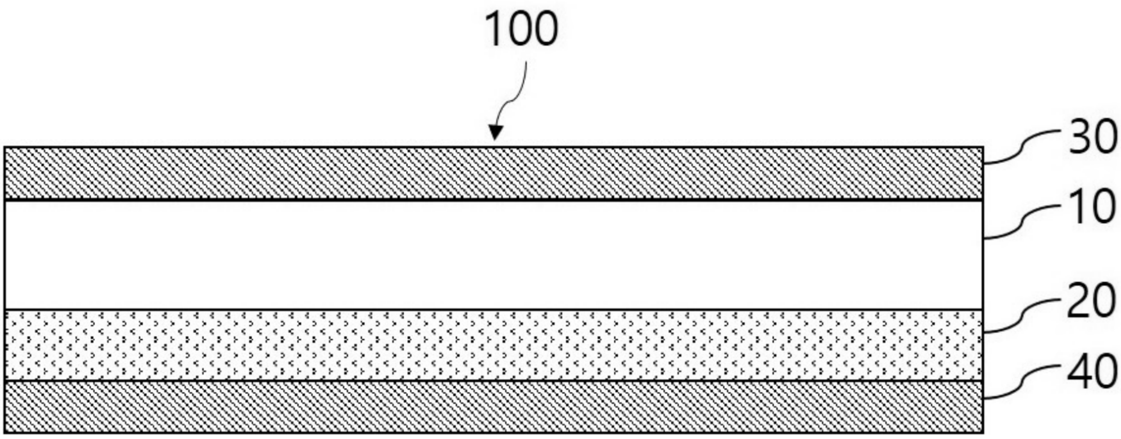


Fig. 2

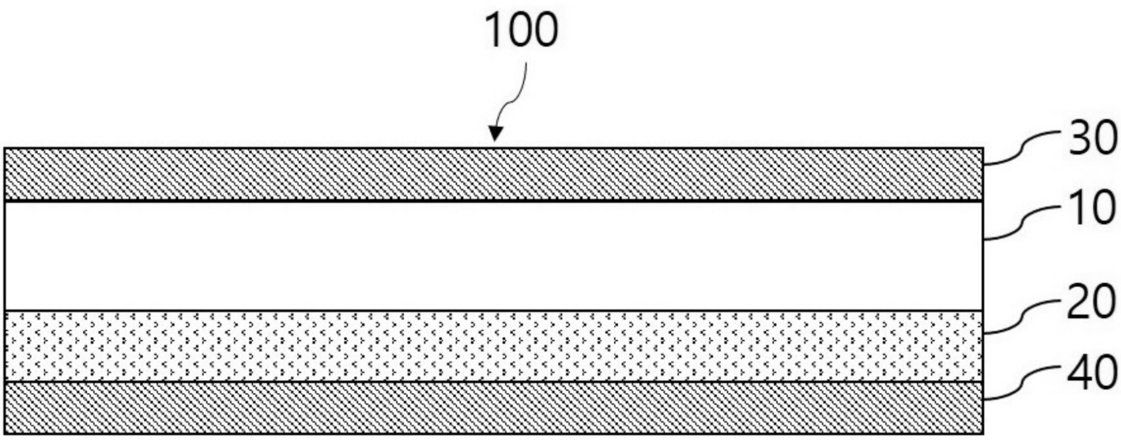

Fig. 3

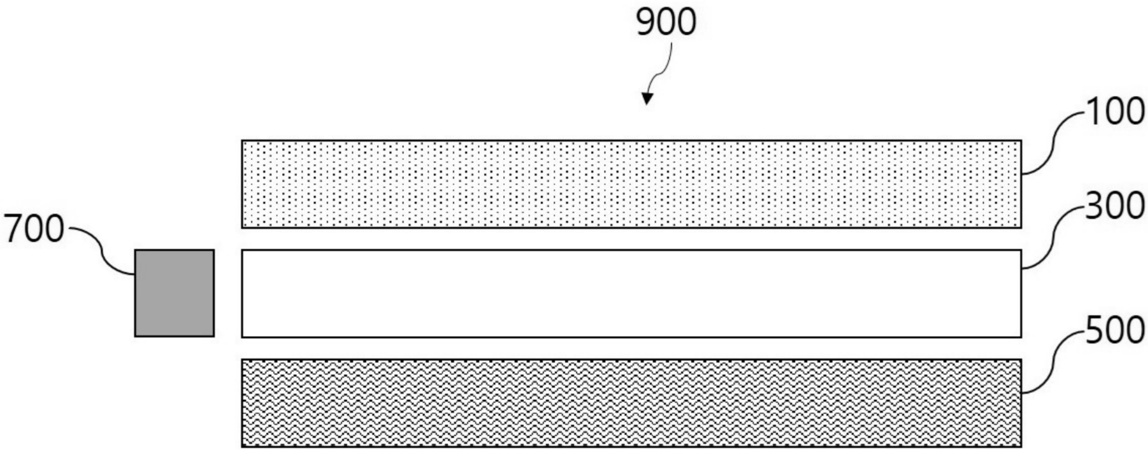

**INTERNATIONAL SEARCH REPORT**

International application No.
**PCT/KR2024/000830**

**A. CLASSIFICATION OF SUBJECT MATTER**

**G02B 5/23**(2006.01)i; **G02F 1/1335**(2006.01)i; **G02F 1/13357**(2006.01)i; **G02B 6/00**(2006.01)i

According to International Patent Classification (IPC) or to both national classification and IPC

**B. FIELDS SEARCHED**

Minimum documentation searched (classification system followed by classification symbols)

G02B 5/23(2006.01); C08K 3/013(2018.01); G02B 5/20(2006.01); H05B 33/12(2006.01); H10K 50/00(2023.01); H10K 50/80(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 파장변환층(wavelength conversion layer), 유기 형광체(organic phosphor), 수지 매트릭스(resin matrix), 광흡수층(light absorption layer), 바인더 수지(binder resin)

**C. DOCUMENTS CONSIDERED TO BE RELEVANT**

| Category* | Citation of document, with indication, where appropriate, of the relevant passages | Relevant to claim No. |
|---|---|---|
| Y<br>A | KR 10-2503060 B1 (TORAY ADVANCED MATERIALS KOREA INC.) 23 February 2023 (2023-02-23)<br>See paragraphs [0034]-[0121], claims 1-19 and figures 1-4. | 1,4-16<br>2,3 |
| Y | KR 10-2018-0035000 A (LG DISPLAY CO., LTD.) 05 April 2018 (2018-04-05)<br>See claims 1, 3, 6, 9, 11 and 14. | 1,4-16 |
| Y | KR 10-2017-0126460 A (TORAY INDUSTRIES, INC.) 17 November 2017 (2017-11-17)<br>See claim 1. | 7 |
| Y | KR 10-2020-0060396 A (HITACHI CHEMICAL COMPANY, LTD.) 29 May 2020 (2020-05-29)<br>See paragraph [0091] and claim 1. | 11 |
| Y | JP 6304228 B2 (JSR CORP.) 04 April 2018 (2018-04-04)<br>See paragraphs [0076]-[0077]. | 14,15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 July 2024** | **04 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/000830**

| Patent document cited in search report | Publication date (day/month/year) | Patent family member(s) | Publication date (day/month/year) |
|---|---|---|---|
| KR 10-2503060 B1 | 23 February 2023 | None | |
| KR 10-2018-0035000 A | 05 April 2018 | None | |
| KR 10-2017-0126460 A | 17 November 2017 | CN 107407755 A | 28 November 2017 |
| | | CN 107407755 B | 05 June 2020 |
| | | JP 6809222 B2 | 06 January 2021 |
| | | TW 201641274 A | 01 December 2016 |
| | | TW I696555 B | 21 June 2020 |
| | | WO 2016-148141 A1 | 22 September 2016 |
| KR 10-2020-0060396 A | 29 May 2020 | CN 111149022 A | 12 May 2020 |
| | | CN 112230319 A | 15 January 2021 |
| | | JP 2021-002056 A | 07 January 2021 |
| | | JP 6760509 B2 | 23 September 2020 |
| | | JP 7120279 B2 | 17 August 2022 |
| | | TW 201920317 A | 01 June 2019 |
| | | US 2020-0255598 A1 | 13 August 2020 |
| | | WO 2019-064589 A1 | 04 April 2019 |
| | | WO 2019-066064 A1 | 04 April 2019 |
| JP 6304228 B2 | 04 April 2018 | TW 201433832 A | 01 September 2014 |
| | | WO 2014-129067 A1 | 28 August 2014 |

Form PCT/ISA/210 (patent family annex) (July 2022)